# EUROPEAN PATENT APPLICATION

(11) **EP 4 788 044 A1**
(43) Date of publication of application: **05.08.2026**
(21) Application number: 24871955.1
(22) Date of filing: 17.09.2024
(51) Int. Cl.: H04W 76/10, H04W 8/22, H04W 72/0457, H04W 74/02, H04W 84/12

(54) **COMMUNICATION DEVICE, COMMUNICATION METHOD, AND PROGRAM**

(30) Priority: 27.09.2023 JP 2023166224
(71) Applicant: Canon Kabushiki Kaisha, Tokyo 146-8501 (JP)
(72) Inventor: YOSHIKAWA, Yuki, Tokyo 146-8501 (JP)
(74) Representative: Canon Europe Limited
(86) International application number: PCT/JP2024/033074
(87) International publication number: WO 2025/070161

(57) **Abstract**

A communication apparatus, capable of performing communication with another communication apparatus using one communication link constituted by a first channel used for obtaining a transmission right and one or more second channels different from the first channel, notifies, using at least one of a UHR (Ultra High Reliability) Capabilities element and a UHR Operation element specified by IEEE 802.11 standard series, another communication apparatus of capability information indicating that an operation for performing communication using the one or more second channels and not using the first channel can be performed and communicates data with said another communication apparatus using one or more channels including any of the first channel and the second channels based on the capability information.

## Description

### TECHNICAL FIELD

The disclosure of the present specification relates to data communication technology for a communication apparatus that can communicate using a communication link constituted by a plurality of channels.

### BACKGROUND ART

In recent years, with increases in the amount of data communication, the development of wireless local area network (LAN) communication techniques has been proceeding. The Institute of Electrical and Electronic Engineers (IEEE) 802.11 standard series is known as the main communication standard for wireless LAN. The IEEE 802.11 standard series includes standards such as IEEE 802.11a/b/g/n/ac/ax/be, and the like. Development of the IEEE 802.11bn standard as the successor of the IEEE 802.11be standard is advancing with the purpose of further improving communication reliability. In the IEEE 802.11WG (Working Group) that is establishing the IEEE 802.11bn standard, the UHR SG is scheduled to set the purpose and scope of the standard, and the TGbn is scheduled to define the specific content of the technology to be included in the standard. Note that UHR SG is an abbreviation for the Ultra High Reliability Study Group. Also, TGbn is an abbreviation for the Task Group bn.

Technology for enhancing channel use efficiency in a communication method that uses a communication link constituted by a plurality of channels is being looked into as one of the candidate technologies to be included in the IEEE 802.11bn standard. For example, with the technology described in PTL 1, in a case where a Primary Channel used for obtaining a transmission right cannot be used, another channel is used for communication.

### CITATION LIST

### PATENT LITERATURE

PTL 1: U.S. Patent No. 11696353

### SUMMARY OF INVENTION

### TECHNICAL PROBLEM

The disclosure according to the present specification provides technology for enhancing channel use efficiency in a communication system that uses a communication link constituted by a plurality of channels.

### SOLUTION TO PROBLEM

A communication apparatus according to an aspect of the disclosed contents of the present specification is capable of performing communication with another communication apparatus using one communication link constituted by a first channel used for obtaining a transmission right and one or more second channels different from the first channel, and is characterized by including:
notifying means for notifying, using at least one of a UHR (Ultra High Reliability) Capabilities element and a UHR Operation element specified by IEEE 802.11 standard series, another communication apparatus of capability information indicating that an operation for performing communication using the one or more second channels and not using the first channel can be performed; and
communicating means for communicating data with said another communication apparatus using one or more channels including any of the first channel and the second channels based on the capability information.

### ADVANTAGEOUS EFFECTS OF INVENTION

According to the present disclosure, the channel use efficiency in a communication system that uses a communication link constituted by a plurality of channels can be enhanced.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
FIG. 1 is a diagram illustrating a configuration example of a wireless communication system.
FIG. 2 is a diagram illustrating an example of a UHR Capabilities element.
FIG. 3 is a diagram illustrating an example of a UHR Capabilities element.
FIG. 4 is a diagram illustrating an example of a UHR Operation element.
FIG. 5 is a diagram illustrating an example of a UHR Operation element.
FIG. 6 is a diagram illustrating an example of the hardware configuration of a communication apparatus.
FIG. 7 is a diagram illustrating an example of the functional configuration of the communication apparatus.
FIG. 8A illustrates an example of a flowchart illustrating the flow of processing executed by the communication apparatus.
FIG. 8B illustrates an example of a flowchart illustrating the flow of processing executed by the communication apparatus.
FIG. 9 illustrates an example of a sequence executed between communication apparatuses.

### DESCRIPTION OF EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

### System Configuration

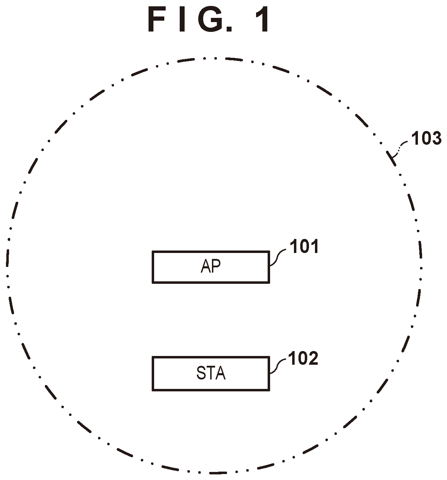

FIG. 1 illustrates a configuration example of a wireless communication system according to the present embodiment. The wireless communication system includes an access point (AP) 101 and a station (STA) 102, for example. The AP 101 and the STA 102 are communication apparatuses that can execute wireless communication compliant with the IEEE 802.11 standard series. In the present embodiment, the AP 101 and the STA 102 may be referred to collectively as a communication apparatus 100. IEEE is an abbreviation for the Institute of Electrical and Electronics Engineers. FIG. 1 illustrates a configuration in which the STA 102 joins a network 103 established by the AP 101. In FIG. 1, a configuration in which one AP 101 and one STA 102 exist is illustrated, but for both the AP and the STA, a plurality may exist. Also, in such an example, a plurality of STAs may be connected to one AP, or one STA may be connected to a plurality of APs.

In the present embodiment, the AP 101 and the STA 102 are configured to be able to execute a communication method compliant with the IEEE 802.11bn standard. The IEEE 802.11bn standard is a successor to the IEEE 802.11be standard with a purpose of 46.08 Gbps (Giga bit per second) for the maximum transmission speed. A main feature of the IEEE 802.11bn standard is that it has a function of achieving high reliability communication, low latency, improvement in throughput when the communication traffic is congested, and the like. The radio frame used in the communication method compliant with this standard may be referred to as a UHR (Ultra High Reliability) PPDU. PPDU is an abbreviation for PLCP Protocol Data Unit, and PLCP is an abbreviation for Physical Layer Convergence Protocol. Note that there is a possibility of the names UHR, IEEE 802.11bn, and the like being changed to a different name after the standard has been established. Also, it should be noted that the scope of the present specification and the claims attached to the present specification can be applied to a communication apparatus using any or all of the successors to the IEEE 802.11be standard. Also, the communication apparatus 100 may support at least any one of the legacy standards from before the IEEE 802.11bn standard. Legacy standards include IEEE 802.11a/b/g/n/ac/ax/be, for example. Also, the communication apparatus 100 may support other communication standards, such as Bluetooth (registered trademark), NFC, UWB, ZigBee, MBOA, and the like. Note that UWB is an abbreviation for Ultra Wide Band, and MBOA is an abbreviation for Multi Band OFDM Alliance. Also, NFC is an abbreviation for Near Field Communication. UWB includes wireless USB, wireless 1394, WiNET, and the like. Also, the communication apparatus 100 may support wired LAN or similar communication standards. Examples of the AP 101 include, but are not limited to, a wireless LAN router, a personal computer (PC), and the like. The AP 101 may be an information processing apparatus such as a radio chip that can execute wireless communication that supports the IEEE 802.11bn standard or the like. Examples of the STA 102 include, but are not limited to, a camera, a tablet, a smartphone, a PC (personal computer), a mobile phone, a video camera, a headset, and the like. The STA 102 may be an information processing apparatus such as a radio chip that can execute wireless communication that supports the IEEE 802.11bn standard or the like.

The communication apparatus 100 may communicate using wireless signals of frequency bands including the 2.4 GHz band, the 3.6 GHz band, the 5 GHz band, the 6 GHz band, or millimeter wave bands such as the 45 GHz band and the 60 GHz band. The frequency band used by the communication apparatus 100 is not limited to these examples and may be a Sub-1 GHz band or the like. Also, the communication apparatus 100 may communicate using a bandwidth such as 20 MHz, 40 MHz, 80 MHz, 160 MHz, 320 MHz, 540 MHz, 640 MHz, 1080 MHz, and 2160 MHz. The bandwidth used by the communication apparatus 100 is not limited to these examples and may be 240 MHz, 4 MHz, or the like, for example. Note that in the IEEE 802.11 standard series, a frequency channel that uses the 20 MHz bandwidth is specified as the basic channel for the 2.4 GHz, 5 GHz, 6 GHz, and similar frequency bands. Also, in the standard, a plurality of usable channels are defined for each frequency band, including the 2.4 GHz band, the 5 GHz band, and the 6 GHz band. Also, in the standard, a combination of a certain channel and another adjacent channel can be used. In the present embodiment, using a combination of a certain channel and another adjacent channel may be referred to as channel bonding. Also, a bundle of channels formed of one channel or two or more channels that are adjacent to one another may be referred to as a communication link (link). In other words, one link formed of two channels of the 20 MHz bandwidth uses the 40 MHz bandwidth. Note that the AP 101 and the STA 102 may be an AP MLD (Multi-Link Device) and a STA MLD that support Multi-Link in which communication is performed with a plurality of links simultaneously established.

In order to communicate data with another communication apparatus, the communication apparatus 100 establishes one or more links between the apparatuses. For example, the STA 102 executes an association procedure with the AP 101 in order to establish a link with the AP 101. When the association procedure between the STA 102 and the AP 101 is complete, a link is established between the apparatuses. By establishing a link, the communication apparatus 100 can access a wireless medium and can perform communication of data and the like with a partner communication apparatus. For example, in a case where one link using the 160 MHz bandwidth is established between the apparatuses, the communication apparatus 100 performs communication using all or a portion of the channels forming the link. A link using the 160 MHz bandwidth may be constituted by bundling eight channels of the 20 MHz bandwidth.

The communication apparatus 100 determines whether or not data can be transmitted by performing carrier sense before transmitting the data. For example, the communication apparatus 100 measures the strength (receive signal strength) of the signal received on the channel the communication apparatus 100 is trying to use for transmission and, in a case where the receive signal strength is greater than a predetermined threshold, determines that a signal exists on the channel. Also, the communication apparatus 100 determines whether or not a signal exists based on information such as a duration field included in the signal received on the channel. For example, the communication apparatus 100 stores the time period indicated by the duration field included in the received signal in the communication apparatus 100 as a Network Allocation Vector (NAV). The communication apparatus 100 may treat the stored NAV as a time period in which the communication apparatus 100 does not transmit. The operation of setting the time period in which the communication apparatus 100 does not transmit based on information such as the duration field of the received signal by the communication apparatus 100 may be referred to as setting the NAV. In a case where the communication apparatus 100 determines that a signal exists on a channel via carrier sense or the set NAV time period has not expired, the communication apparatus 100 may determine that it is unavailable for transmission. The state of the channel in this case may be referred to as a busy state. On the other hand, a state in which a signal is not detected on a channel in carrier sense and NAV is not set may be referred to as an idle state. The communication apparatus 100 may determine that it is available for transmission in a case where the channel is in an idle state. Note that the communication apparatus 100, for example, may determine whether or not transmission can be performed using only the primary channel (PCH) when transmitting using a link with a bandwidth of 160 MHz. The PCH is one of the eight 20 MHz-bandwidth channels forming the 160 MHz-bandwidth link and is notified to the STA 102 by a Beacon frame periodically broadcast by the AP 101, for example. For example, in a case where the communication apparatus 100 determines that it is available for transmission as a result of performing carrier sense on the PCH over a predetermined time period, the communication apparatus 100 may perform transmission via channel bonding using another channel included in the same link. Also, in a case where the communication apparatus 100 determines that it is unavailable for transmission as a result of performing carrier sense on the PCH, even if the other channels included in the same link are in the idle state, transmission may be deferred. Note that each of the channels other than the PCH that form one link may be referred to as a secondary channel (SCH). The secondary channels may be referred to as non-primary channels (NPCH).

In the communication apparatus 100, in a case where a signal is received in a certain channel and a signal is transmitted on another channel (for example, an adjacent channel or the like) placed at a frequency near that of the certain channel, the signal being received may not be appropriately received. Consider an example where the communication apparatus 100 can simultaneously execute transmission processing and reception processing using different channels. In a case where the communication apparatus 100 is receiving using a certain channel and then performs transmission using an adjacent channel, interference may be caused in the reception signal due to the power of the transmission signal leaking to the channel of the reception signal. Typically, such power from the transmission signal leak is much greater than the received power of the reception signal, and thus the reception signal is not appropriately received. To avoid such a situation, in the IEEE 802.11 standard series, a PCH is provided as a common channel used to determine whether or not transmission can be performed between communication apparatuses. In other words, while one communication apparatus is performing transmission using the PCH, the other communication apparatus does not perform transmission even if the other channels are in the idle state. Accordingly, the problem of interference caused by power leakage across channels as described above can be resolved. However, not using the other channels (SCH) in the idle state while the PCH is in a busy state reduces the frequency utilization efficiency. For example, in a case where the communication apparatus 100 only uses the 20 MHz-band PCH for transmission, even if the other seven SCHs are in the idle state, the partner communication apparatus cannot perform transmission using these SCHs. Also, in a case where another network established by another AP (not illustrated) exists geographically close to the AP 101, if the other network uses the PCH, the PCH may be determined as being in the busy state. At this time, since the AP 101 is not performing transmission, if the STA 102 performs transmission to the AP 101 using an SCH channel, the AP 101 may appropriately receive a signal transmitted by the STA 102. In this manner, for example, by the 20 MHz PCH being used by another network, unless the SCHs in the idle state accounting for the remaining 140 MHz are used, the frequency resources cannot be used efficiently. In the present embodiment, a function is provided for, in a case where the PCH is being used by another communication apparatus, performing communication between communication apparatuses using an SCH (or an NPCH) included in the same link as the PCH instead of using the PCH. For example, between communication apparatuses, in a case where the PCH is in the busy state, between communication apparatuses, a secondary primary channel (SPCH) for determining whether or not transmission can be performed using an SCH (or NPCH) may be set. In a case where the communication apparatus 100 determines that the PCH is being used by another communication apparatus, the communication apparatus 100 then determines whether or not transmission can be performed using the SPCH, and in a case where the communication apparatus 100 determines that it is available for transmission, the communication apparatus 100 performs transmission using one or more SCHs including the SPCH. Channel access for performing transmission using one or more channels including the SPCH instead of using the PCH in this manner may be referred to as NPCH access (Non-Primary Channel Access, NPCA). In NPCH access, the communication apparatus on the transmitting side executes transmission processing to transmit a signal to the partner communication apparatus using one or more SCHs including the SPCH channel. The communication apparatus on the receiving side executes reception processing to receive a signal transmitted from the partner communication apparatus using one or more SCHs including the SPCH channel. In order to perform NPCH access, the communication apparatus 100 shares information including whether it has the capability to perform NPCH access, the channel set for the SPCH, and the like, with the partner communication apparatus in advance. An example of operations of a notification of the capability information at the time of connection between the communication apparatuses and channel access based on the capability information will be described below.

### Operations at Time of Notification of Capability Information Between Communication Apparatuses

The AP 101 periodically broadcasts information required for other communication apparatuses (STA 102 or the like) to connect to it using a Beacon frame (Beacon). The STA 102 recognizes the AP 101 by receiving the Beacon and starts the wireless connection procedure. Note that in a case where the AP 101 does not transmit a Beacon, a case where the STA 102 cannot appropriately receive the Beacon transmitted by the AP 101, and the like, the STA 102 may start the wireless connection procedure without receiving a Beacon. For example, the STA 102 may start the wireless connection procedure using an SSID (Service Set Identifier) or the like registered in advance by the user or the like. In order to connect to the AP 101, the STA 102 first transmits a Probe Request frame (Probe Request) to the AP 101. When the AP 101 receives the Probe Request, the AP 101 transmits a Probe Response frame (Probe Response) with the STA 102 as the destination. When the STA 102 receives the Probe Response, the STA 102 transmits an Authentication frame (Authentication) to the AP 101. When the AP 101 receives the authentication, the AP 101 transmits the authentication to the STA 102. When the STA 102 receives the authentication, the STA 102 transmits an association request frame (association request). When the AP 101 receives the association request, the AP 101 transmits an association response frame (association response). In this manner, by executing an association procedure between the AP 101 and the STA 102, a link using a wireless medium is established between the AP 101 and the STA 102. Note that after the association procedure described above, the AP 101 and the STA 102 may execute a 4-way handshake or the like for exchanging security information. Also, the AP 101 and the STA 102 may execute a wireless connection procedure using a method different from that described above.

The AP 101 and the STA 102 share information that may identify whether they have the capability to execute NPCH access, the channel to use as the SPCH, and the like, with the partner communication apparatus in the wireless connection procedure. In the present embodiment, information that identifies a function provided for the communication apparatus 100 to perform wireless communication may be referred to as capability information. Capability information may include various types of information exchanged by the communication apparatus 100 with another communication apparatus in order to perform NPCH access. For example, the capability information may include that it can perform NPCH access, the number of channels capable of performing carrier sense in parallel, information that identifies the SPCH, the SPCH priority order, and the like. The SPCH priority order is a priority order indicating which SPCH is to be prioritized when the communication apparatus 100 performs carrier sense in a case where a plurality of SPCHs are set. The communication apparatus 100 may notify the partner communication apparatus of capability information indicating that it can perform NPCH access. Also, the communication apparatus 100 may obtain capability information indicating that the partner communication apparatus can perform NPCH access from the partner communication apparatus. Note that the capability to perform NPCH access may correspond to one of being able to execute transmission processing in the NPCH access and being able to execute reception processing in the NPCH access, or may correspond to both. Also, the communication apparatus 100 may voluntarily execute a notification of its capability information or may execute a notification of its capability information based on a request by the partner communication apparatus.

The AP 101 may periodically broadcast a Beacon including the capability information in order to notify of its capability information. By broadcasting using a Beacon, the AP 101 may efficiently notify an unspecified number of STAs 102 of its capability information. Also, before starting the association procedure, the STA 102 can reduce the amount of information to be exchanged in the association procedure by knowing the capability information of the AP 101. Note that instead of a Beacon, a FILS Discovery frame may be used. A FILS Discovery frame may be used for broadcasting only a portion (SSID, channel information, or the like) of the information included in a Beacon. Also, the AP 101 may notify the STA 102 of the capability information using a Probe Response or Association Response transmitted to the STA 102. The STA 102 may notify the AP 101 of its capability information using a Probe Request or Association Request.

The communication apparatus 100 may passively obtain the capability information by waiting for notification of the capability information from the partner communication apparatus, or may proactively obtain the capability information by requesting the partner communication apparatus for it. For example, the STA 102 may obtain the capability information of the AP 101 by receiving a Beacon transmitted from the AP 101. The STA 102 may request the AP 101 for the capability information using a Probe Request or an Association Request and may obtain the capability information of the AP 101 via a Probe Response or an Association Response. The AP 101 may request the STA 102 for a notification of the capability information using a Probe Response or an Association Response.

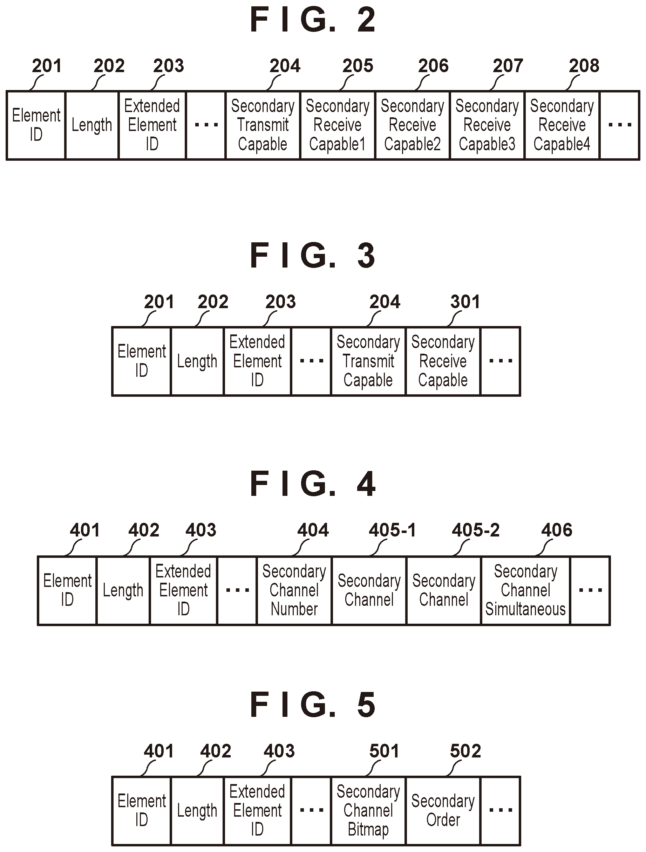

For example, the capability information may be notified using a UHR Capabilities element. The UHR Capabilities element may be included in the above-described Beacon, Probe Request, Probe Response, Association Request, Association Response, and the like. The UHR Capabilities element may be included in a frame other than these. For example, the UHR Capabilities element may be included in an action frame (action). In this case, after a link between the apparatuses is established, the link setting can be flexibly changed. For example, depending on the surrounding environment, the SCH set as the SPCH can be changed, the SPCH priority order can be changed, and the like. FIG. 2 illustrates an example of a UHR Capabilities element. The UHR Capabilities element includes an Element ID field 201, a Length field 202, and an Extended Element ID field 203. The UHR Capabilities element may also include a Secondary Transmit Capable (STC) field 204 and a Secondary Receive Capable (SRC) 1 field 205. The UHR Capabilities element may further include an SRC 2 field 206, an SRC 3 field 207, and an SRC 4 field 208. The element type is indicated by the combination of the Element ID field 201 and the Extended Element ID field 203. For example, an element with the Element ID field 201 set to 255 and the Extended Element ID field 203 set to 138 is a UHR Capabilities element. The Length field 202 indicates the length of the element. The STC field 204 indicates whether or not the communication apparatus 100 can execute transmission processing in the NPCH access. The SRC 1 field 205 indicates that the number of channels that this apparatus can receive is 1 in a case where the partner communication apparatus performs transmission using NPCH access. In a similar manner, the SRC 2 field 206 indicates that the number of channels that this apparatus can receive in parallel (number of channels capable of receiving) is 2 in a case where the partner communication apparatus performs transmission using NPCH access. The SRC 3 field 207 indicates that the number of channels capable of receiving is 3. The SRC 4 field 208 indicates that the number of channels capable of receiving is 4. For example, only the SRC 1 field 205 being set to 1 and the SRC 2 field 206 to the SRC 4 field 208 being each set to 0 indicates that the number of channels capable of receiving is 1. Note that the STC field 204 and the SRC 1 field 205 to the SRC 4 field 208 may be consolidated into one field. In this case, with one bit, that the apparatus can perform both transmission and reception in NPCH access is indicated. Also, the SRC 1 field 205 to the SRC 4 field 208 may be consolidated into one field. In this case, with one bit, that the apparatus can execute reception processing in NPCH access is indicated. Note that in a case where the communication apparatus 100 can execute reception processing simultaneously for 5 or more channels, an SRC 5 field (not illustrated), an SRC 6 field (not illustrated), and the like may be provided. In this case, it can be indicated to the partner communication apparatus that reception processing can be executed simultaneously for more channels. Note that the number of channels that the communication apparatus 100 is capable of simultaneously receiving is, for example, the number of reception circuits included in the communication apparatus 100. By having each reception circuit correspond to a channel (SPCH or the like), reception processing of a signal received on a plurality of channels can be executed in parallel. Also, the number of channels that the communication apparatus 100 is capable of simultaneously receiving may be the number of channels on which carrier sense can be simultaneously performed by the communication apparatus 100 (number of channels capable of carrier sense). For example, in a case where the number of reception circuits included in the communication apparatus 100 is 1, the communication apparatus 100 may execute carrier sense in parallel on a plurality of channels, select one channel from among the channels that detect a signal, and execute reception processing of the received signal. Also, the number of channels that the communication apparatus 100 is capable of simultaneously receiving may be the number of reception antennas included in the communication apparatus 100. In a case where the antennas are associated in a manner such that processing of different channel signals can be executed, the communication apparatus 100 may execute, in parallel, reception processing of the signals received on each channel. Note that in a similar manner, the communication apparatus 100 may notify the partner communication apparatus of the number of channels capable of performing carrier sense and the number of channels capable of receiving using separate fields. In this case, the NPCH access scheduling can be easily adjusted between the apparatuses.

FIG. 3 illustrates another example of a UHR Capabilities element. In FIG. 3, instead of the SRC 1 field 205 to SRC 4 field 208 in FIG. 2, a Secondary Receive Capable (SRC) field 301 is provided. The SRC field 301 may be constituted by two bits, for example. For example, in a case where the communication apparatus 100 cannot execute reception processing in NPCH access, the communication apparatus 100 may set the value of the SRC field 301 to 0. Also, in a case where the number of channels capable of receiving is 1, 2, or 4, the communication apparatus 100 may set the value of the SRC field 301 to 1, 2, or 3, respectively. Note that in a case where the number of channels capable of receiving is 3, the communication apparatus 100 may set the value of the SRC field 301 to 3. Also, the communication apparatus 100 may separately provide the SRC field indicating that it can execute reception processing in the NPCH access and another field ("number of channels capable of receiving" field, not illustrated) indicating the number of channels capable of receiving. In a case where the SRC field indicates that the communication apparatus 100 can execute reception processing in the NPCH access, the "number of channels capable of receiving" field may indicate the number of channels capable of receiving.

The communication apparatus 100 may notify the partner communication apparatus of the capability information using an element or field other than the UHR Capabilities element. For example, the communication apparatus 100 may perform notification of the capability information using an extended capabilities field. In this case, for example, the communication apparatus 100 does not support the IEEE 802.11bn standard but can exchange capability information with a communication apparatus that can execute NPCH access. Also, a novel element or field for exchanging capability information relating to NPCH access may be established. By a novel element or field being established, information required for NPCH access can be flexibly exchanged between the communication apparatuses.

### Operations for Setting SPCH

In a case where there are a plurality of SCHs, the communication apparatus 100 may determine an SPCH from among them. There may be one SPCH or a plurality. The SPCH may be determined by one communication apparatus, notified to the other communication apparatus, or adjusted between the apparatuses. For example, the AP 101 may determine the SPCH to be used in common by all of the STAs that connect to it and notify the STAs of this using a Beacon or the like. Also, in a case where the AP 101 sets an SPCH individually for each STA that connects to it, the AP 101 may adjust the SPCH in the association procedure (in the exchange of an association request and association response or the like) with each STA. For example, the SPCH may be notified using a UHR Operation element. The UHR Operation element may be included in the above-described Beacon, Probe Request, Probe Response, Association Request, Association Response, Action, and the like. The UHR Operation element may be included in another frame.

FIG. 4 illustrates an example of a UHR Operation element. The UHR Operation element includes an Element ID field 401, a Length field 402, and an Extended Element ID field 403. The UHR Operation element also includes a Secondary Channel Number field 404, Secondary Channel field 405, and a Secondary Simultaneous field 406. The Element ID field 401 and the Extended Element ID field 403 are similar to the Element ID field 401 and the Extended Element ID field 403 in FIG. 2 and thus will not be described. The Length field 402 indicates the length of the element. The Secondary Channel Number field 404 indicates the number of following Secondary Channel (SC) fields 405. The Secondary Channel (SC) fields 405 exist in a number equal to the value designated in the field 404. In FIG. 4, an example is illustrated in which 404 stores the value 2, and two 405 fields (405-1 and 405-2) exist. These SC fields 405 are fields indicating the position of the SPCH on the frequency axis. Note that the Secondary Channel Number field 404 may be referred to as a Secondary Primary Channel Number field. Also, the Secondary Channel field 405 may be referred to as a Secondary Primary Channel field. The communication apparatus 100 may indicate the position of the SPCH on the frequency axis by storing the SPCH channel number in the SC field 405. For example, in a case where a channel number is used for indicating the position of the SPCH, the SC field 405 may be constituted by a field indicating the SPCH Operating Class and a field indicating the Channel. The Operating Class is an identifier that can uniquely identify a frequency band designated by a country or region used by the communication apparatus 100. Also, the Channel is an identifier that can uniquely identify each channel included in the frequency band identified by the Operating Class. The communication apparatus 100 may indicate the position of the SPCH by storing the relative position of the SPCH on the frequency axis with the PCH as a reference in the SC field 405. For example, the communication apparatus 100 uses a 160 MHz-bandwidth link in the 6 GHz band and sets 1ch in this band as the PCH (with a bandwidth of 20 MHz). Also, each SCH (with a bandwidth of 20 MHz) is 5ch, 9ch, 13ch, 17ch, 21ch, 25ch, and 29ch, respectively. In a case where 21ch is set as the SPCH, the communication apparatus 100 sets the value of the SC field 405 to 20. In other words, 20, which is the relative distance on the frequency axis from 1ch the PCH to 21ch the SPCH, may be set as the value of the SC field 405. Also, the communication apparatus 100 may allocate successive different identifiers (0, 1, 2, ...) in order from the lowest frequency to the positions (1ch, 5ch, 9ch, ...) on the frequency axis of the PCH and each SCH described above. For example, in a case where 21ch is set as the SPCH, the communication apparatus 100 may set the value of the SC field to 5, which is a different identifier for 21ch. In this manner, the number of bits of the field used for notification of the position of the SPCH on the frequency axis may be reduced. Also, the communication apparatus 100 may indicate the position of the SPCH on the frequency axis by storing the center frequency of the SPCH in the SC field 405. In this case, depending on the frequency band, the bandwidth that can be used is set in accordance with the center frequency. Thus, the value of the SC field 405 may indicate the bandwidth in addition to the center frequency of the SPCH. For example, in a case where the value of the SC field 405 is 6065, this indicates that the SPCH is a channel in the 6 GHz band with a center frequency of 6065 MHz and a bandwidth of 80 MHz. Note that the SC field 405 may separately include information indicating the bandwidth of the SCH. For example, if the value of the field (not illustrated) indicating the bandwidth is 0, 1, 2, 3, or 4, these may indicate that the SPCH bandwidth is 20 MHz, 40 MHz, 80 MHz, 160 MHz, and 320 MHz, respectively. Also, the communication apparatus 100 may store a combination of two or more of any of the Operating Class, channel number, center frequency, and bandwidth in the SC field 405.

The communication apparatus 100 may notify the partner communication apparatus of the priority order assigned to each SPCH in the case of setting a plurality of SPCHs. For example, the communication apparatus 100 may assign, to each SPCH, a priority order indicating which SPCH is to be prioritized and used in carrier sense in NPCH access. If the number of channels capable of performing carrier sense in the communication apparatus 100 is equal to or greater than the number of SPCHs, the communication apparatus 100 can execute carrier sense in parallel for each SPCH. However, if the number of SPCHs is greater than the number of channels capable of performing carrier sense in the communication apparatus 100, the communication apparatus 100 may execute carrier sense of each channel in order according to the priority order assigned to each SPCH. The communication apparatus 100 may include the priority order assigned to each SPCH in the SC field 405. Also, the communication apparatus 100 may store the SC field 405 corresponding to each SPCH in one UHR Operation element and perform notification. At this time, the communication apparatus 100 may place the information of each SPCH in the UHR Operation element according to the priority order of each SPCH. By placing the SPCH information according to the priority order assigned to each SPCH, the priority order of each SPCH is implicitly indicated. Thus, the priority order of the SPCHs can be notified without increasing the number of bits of the SC field 405.

The Secondary Channel Simultaneous field 406 indicates the number of channels capable of performing carrier sense of the communication apparatus 100. The Secondary Channel Simultaneous field 406 may be referred to as a Secondary Primary Channel Simultaneous field. In a case where the number of channels capable of performing carrier sense is 1, the communication apparatus 100 may set the Secondary Channel Simultaneous field 406 to 0. In other words, by setting the Secondary Channel Simultaneous field 406 to 0, the communication apparatus 100 may indicate that carrier sense is to be performed on each SPCH in order according to the priority order assigned to the SPCHs. Also, in a case where the number of channels capable of performing carrier sense is 2, the communication apparatus 100 may set the Secondary Channel Simultaneous field 406 to 1. In this case, when the communication apparatus 100 detects that the PCH is in the busy state, the communication apparatus 100 performs carrier sense on two SPCHs in parallel according to the priority order assigned to the SPCHs. Note that by using the Secondary Channel Simultaneous field 406, the communication apparatus 100 may indicate the number of channels capable of receiving in the UHR Operation element. Note that the communication apparatus 100 may notify of the number of channels capable of performing carrier sense and the number of channels capable of receiving using different fields.

FIG. 5 illustrates another example of a UHR Operation element. The Element ID field 401, the Length field 402, and the Extended Element ID 403 are similar to the fields illustrated in FIG. 4 and thus will not be described. In FIG. 5, a Secondary Channel Bitmap field 501 and a Secondary Order field 502 are included instead of the Secondary Channel Number field 404 and the SC field 405. The Secondary Channel Bitmap field 501 may be referred to as a Secondary Primary Channel Bitmap field. The Secondary Order field 502 may be referred to as a Secondary Primary Channel Order field. The Secondary Channel Bitmap field 501 may indicate the position of the SPCH on the frequency axis for one link constituted by a PCH and SCHs. For example, in a case where the communication apparatus 100 uses a 160 MHz-bandwidth link constituted by channels 1ch to 29ch in the 6 GHz band, each channel is associated with a bit of the Secondary Channel Bitmap field 502. For example, in a case where the SPCH is 17ch, the fourth bit from the left end of the Secondary Channel Bitmap field 502 may be set to 1.

The Secondary Order field 502 indicates information for identifying the priority order of each SPCH. There are cases where the bandwidth used in NPCH access is different due to the placement on the frequency axis of the PCH and the SPCH in the link used by the communication apparatus 100 and the position on the frequency axis of the SPCH detected as being in the idle state. For example, in a case where the PCH in the 160 MHz link is set to 1ch, in NPCH access that does not use a PCH, transmission cannot be performed using the 20 MHz, 40 MHz, and 80 MHz bands including 1ch. Accordingly, in a case where the SPCHs are 5ch, one of 9ch to 13ch, and one of 17ch to 29ch, the maximum bandwidths that can be used for performing NPCH access are 20 MHz, 40 MHz, and 80 MHz, respectively. Thus, the communication apparatus 100 can increase the data amount that can be communicated with NPCH access by assigning a higher priority order to the SPCHs with a greater bandwidth that may be used in NPCH access. For example, in a case where the communication apparatus 100 assigns the priority order to the SPCHs in order from the SPCHs with the greater bandwidth that can be used in NPCH access, the communication apparatus 100 may set the Secondary Order field 502 to 0. For example, in a case where 1ch is set as the PCH and 5ch, 7ch, and 17ch are set as the SPCHs, the Secondary Order field 502 being set to 0 indicates that carrier sense is to be performed in order from 1ch, 17ch, 7ch, and 5ch. In this manner, the order of the SCHs for performing carrier sense if they are used in NPCH access may be shared between apparatuses via the Secondary Order field 502. Note that the method of assigning the priority order to each SPCH is not limited to that described above, and the priority order may be assigned with the SPCHs that are farthest from the PCH on the frequency axis being given the highest priority order. In this manner, interference between the communication performed using the PCH and the communication performed using NPCH access may be reduced. Also, the priority order may be assigned with the SPCHs that are closest to the PCH on the frequency axis being given the highest priority order. In a case where the PCH is in the busy state, if many communication apparatuses performing NPCH access try to communicate using an SCH far from the PCH, the possibility of signal collision is increased. With a portion of the communication apparatuses set with an SCH that is close to the PCH on the frequency axis as the SPCH, the probability of signal collision may be reduced. For example, a communication apparatus with a small data amount to be communicated may be set with one SCH that is close to the PCH as the SPCH. Note that the priority order assigned to the SPCHs may be given via a combination of these methods. Also, in a case where the SPCH priority order is set in advance for the communication standard, the Secondary Order field 502 may be deleted. Also, an SPCH priority order set in advance may be used between the communication apparatuses. In this case, the Secondary Order field 502 may be deleted.

In a case where the communication apparatus 100 can separately set the SPCH for transmission and the SPCH for reception, the communication apparatus 100 may separately provide a field indicating the information of the SPCH for transmission and a field indicating the information of the SPCH for reception for each field indicated in FIGS. 4 and 5. This can enable flexible transmitting and receiving control. Also, in the example described above according to the present embodiment, the information included in the UHR Capabilities element and the information included in the UHR Operation element are notified via separate elements. However, these may be notified via the same element. This enables the information required for NPCH access to be exchanged all at once. Note that in a case where the number of channels capable of performing carrier sense in the communication apparatus 100 is greater than the number of channels capable of receiving in the partner apparatus, the communication apparatus 100 may set the number of channels capable of receiving in the partner communication apparatus as its number of channels capable of performing carrier sense in parallel. The number of channels performing carrier sense in parallel by the communication apparatus 100 may be referred to as the number of channels performing carrier sense. Also, in a case where the number of channels capable of performing carrier sense in the communication apparatus 100 is equal to or less than the number of channels capable of receiving in the partner apparatus, the communication apparatus 100 may set its number of channels capable of performing carrier sense as the number of channels performing carrier sense. Note that in the present embodiment, the information notified using the UHR Capabilities element and the UHR Operation element may be included in the capability information. Also, the information illustrated in FIGS. 4 and 5 may be included in the UHR Capabilities element, and the information illustrated in FIGS. 2 and 3 may be included in the UHR Operation element.

### Operations when Communication Apparatus Transmits Data

The operations when the communication apparatus 100 according to the present embodiment executes channel access and transmits data will now be described. When the communication apparatus 100 detects that data has accumulated in its own transmission queue, to transmit this data, the communication apparatus 100 starts the channel access procedure. First, the communication apparatus 100 performs carrier sense on the PCH. In a case where a signal is detected in the carrier sense, the communication apparatus 100 determines whether or not the signal is a signal transmitted from a communication apparatus belonging to the network 103. A signal transmitted from a communication apparatus belonging to the network 103 may be referred to as a signal from its own BSS (Basic Service Set). Also, a signal transmitted from a communication apparatus belonging to a network other than the network 103 may be referred to as a signal from an OBSS (Overlapping BSS). For example, the communication apparatus 100 may determine whether the signal is a signal from its own BSS or a signal from an OBSS based on whether or not the BSS Color field included in the received signal matches the BSS Color of its own BSS. Also, the communication apparatus 100 may determine whether the signal is a signal from its own BSS or a signal from an OBSS based on whether or not a value stored in a destination field, a source field, or the like included in the received signal matches a parameter of its own BSS. Also, the communication apparatus 100 sets the NAV for the PCH using the time period indicated in a Duration field included in the received signal. The communication apparatus 100 determines whether or not to execute NPCH access based on the signal detected on the PCH. For example, in a case where the signal detected on the PCH is a signal from an OBSS, the communication apparatus 100 may execute the next procedure for performing NPCH access. Also, in a case where the signal detected on the PCH is a signal from its own BSS, the communication apparatus 100 may determine not to execute NPCH access. At the point in time when the communication apparatus 100 detects that data has accumulated in its transmission queue, in some cases, the NAV has already been set for the PCH. In this case, the communication apparatus 100 may determine whether or not to execute NPCH access by determining whether the signal that was received when the NAV was set is a signal from its own BSS or a signal from an OBSS. In a case where the communication apparatus 100 does not detect a signal on the PCH, the communication apparatus 100 measures the backoff counter and determines whether or not the PCH is in the idle state. In other words, in a case where the communication apparatus 100 does not detect a signal in a time period defined by the backoff counter, the communication apparatus 100 determines that the PCH is in the idle state. In a case where the PCH is determined to be in the idle state, the communication apparatus 100 transmits the signal using one or more channels including the PCH. Note that the communication apparatus 100 may execute carrier sense of the SCH throughout a predetermined time period after determining that the PCH is in the idle state. Also, the communication apparatus 100 may execute carrier sense of the SCH in parallel with carrier sense of the PCH. The communication apparatus 100 may determine the channel to use in transmission based on the result of the carrier sense performed for each of the PCH and the SCH, and may transmit a signal. For example, the communication apparatus 100 may transmit a signal using the PCH and one or more SCHs determined to be in the idle state.

In a case where the communication apparatus 100 advances the NPCH access procedure due to detecting a signal on the PCH, the communication apparatus 100 executes SPCH carrier sense. In a case where a plurality of SPCHs are set between the communication apparatuses, the communication apparatus 100 executes carrier sense in order of the SPCH with the highest assigned priority order. Also, in a case where the communication apparatus 100 can execute carrier sense in parallel for a plurality of SPCHs, the communication apparatus 100 may execute carrier sense in parallel for the plurality of SPCHs selected in order from the SPCH with the highest assigned priority order. In a case where the communication apparatus 100 does not detect a signal on the SPCH, as with carrier sense for the PCH, the communication apparatus 100 measures the backoff counter and determines whether or not it is in the idle state. The backoff counter used in the PCH carrier sense and the backoff counter used in the SPCH carrier sense may be different from one another. In a case where the number of communication apparatuses that may execute NPCH access is low, since the possibility of signal collision is relatively low, the communication apparatus 100 may set a short backoff counter compared to the carrier sense for the PCH. Also, in a case where a plurality of SPCHs are set, the backoff counter used for the carrier sense of each SPCH may be different from one another. The communication apparatus 100 may start transmission using the SPCH for which a transmission right was first obtained from among the SPCHs that have performed carrier sense in parallel. Note that the communication apparatus 100 may execute carrier sense for the PCH and carrier sense for the SPCH using one common backoff counter. In this case, the communication apparatus 100 may execute carrier sense of the SPCH via a backoff counter of what remains after the countdown for the carrier sense for the PCH. In a case where the communication apparatus 100 determines that any of the SPCHs is in the idle state, the communication apparatus 100 transmits the signal using the one or more SCHs including that SPCH. Note that the communication apparatus 100 may execute carrier sense of another SCH throughout a predetermined time period after determining that the SPCH is in the idle state. The communication apparatus 100 may determine the channel to use in transmission based on the result of the carrier sense performed for each of the SPCH and the SCH, and may transmit a signal. For example, the communication apparatus 100 may transmit a signal using the one or more SPCHs determined to be in the idle state and the SCH. In a case where the communication apparatus 100 has detected a signal on the SPCH, the communication apparatus 100 determines whether the detected signal is a signal from its own BSS or a signal from an OBSS. In a case where the detected signal is a signal from its own BSS, the communication apparatus 100 may cancel the NPCH access and defer transmission until the NAV time period set for the PCH has expired. For example, in a case where the AP 101 has detected a signal from its own BSS on the SPCH, since the signal is a signal with the AP 101 as its destination, if the AP 101 performs transmission on another SCH during reception of this signal, the signal may not be appropriately received. On the other hand, in a case where the STA 102 has detected a signal from its own BSS on the SPCH, if the signal has the STA 102 as the destination and the STA 102 performs transmission on another SCH during reception of this signal by the STA 102, the signal may not be appropriately received. Also, in a case where the signal has the AP 101 as the destination and the STA 102 transmits the signal on another SCH during reception of the signal by the AP 101, if a response to any of the signals has been transmitted by the AP 101, another signal may not be appropriately received. Accordingly, in a case where the communication apparatus 100 has detected a signal from its own BSS on the SPCH, the communication apparatus 100 may cancel the NPCH access. In a case where the detected signal is a signal from an OBSS, the communication apparatus 100 determines whether or not there is another SPCH for which carrier sense has not been performed. In a case where there is another SPCH, carrier sense is performed in order of the SPCH with the highest assigned priority order. In a case where the communication apparatus 100 executes carrier sense in order of the SPCH with the highest assigned priority order and all of the SPCHs are in the busy state, the communication apparatus 100 defers the transmission until the NAV time period set for the PCH has expired.

### Operations when Communication Apparatus Receives Data

The operations when the communication apparatus 100 according to the present embodiment receives data will now be described. The communication apparatus 100 monitors the presence of a signal on the PCH while data has not accumulated in its transmission queue. In a case where the communication apparatus 100 has detected a signal on the PCH, the communication apparatus 100 determines whether the signal is a signal from its own BSS or a signal from an OBSS. In a case where the signal is a signal from its own BSS, the communication apparatus 100 determines whether or not the signal has the communication apparatus 100 as the destination. In a case where the signal has the communication apparatus 100 as the destination, reception processing is continued. In a case where the signal does not have the communication apparatus 100 as the destination, reception processing may be canceled. In a case where the detected signal is a signal from an OBSS, the communication apparatus 100 sets the NAV for the PCH. Also, the communication apparatus 100 monitors the presence of a signal on the SPCH in preparation to receive a signal by NPCH access. In a case where a plurality of SPCHs are set, the communication apparatus 100 may monitor the presence of a signal on each SPCH in parallel. In a case where the communication apparatus 100 has detected a signal on the SPCH, the communication apparatus 100 determines whether the signal is a signal from its own BSS or a signal from an OBSS. In a case where the signal is a signal from its own BSS, the communication apparatus 100 determines whether or not the signal has the communication apparatus 100 as the destination. In a case where the signal has the communication apparatus 100 as the destination, reception processing is continued. In a case where the signal does not have the communication apparatus 100 as the destination, reception processing for the signal may be canceled. In a case where the detected signal is a signal from an OBSS, the communication apparatus 100 may cancel the reception processing for the signal. In a case where a priority order is assigned to the SPCHs, the communication apparatus 100 may execute monitoring of a signal on each SPCH according to the priority order. In a case where the communication apparatus 100 has received a signal from an OBSS on the SPCH with a high priority order, the communication apparatus 100 may cancel the carrier sense for that SPCH and start carrier sense for the SPCH with the next highest priority order. In a case where the communication apparatus 100 does not detect a signal on the SPCHs for a certain time period, the partner communication apparatus, due to detecting a signal on the SPCH, may change to the SPCH with the next highest priority order and execute carrier sense. Thus, in a case where the communication apparatus 100 does not detect a signal on the SPCH for a predetermined time period, the communication apparatus 100 may change the monitoring target to the SPCH with the next highest priority order. The communication apparatus 100 may use, as the predetermined time period, a time period that is longer than the maximum value of carrier sense time period (including the backoff counter) used in the NPCH access, for example. By monitoring a signal on the SPCH for a time period longer than the carrier sense time period, it can be confirmed that the possibility of the partner communication apparatus performing transmission on the SPCH is low and changes to the next SPCH. Also, the predetermined time period may be set in accordance with the number of channels performing carrier sense or may be set in accordance with the NAV set for the PCH. Also, the predetermined time period may be a time period set by a standard and may be a time period excluding a predetermined time period from the NAV divided by the number of channels capable of performing carrier sense, for example. Note that the communication apparatus 100 may execute reception of a signal for the PCH in parallel also in a time period in which a signal on an SPCH is being monitored in preparation for NPCH access. The communication apparatus 100 may start monitoring for a signal on the PCH when the NAV time period set for the PCH expires or in a case where the set NAV is cleared. The NAV set for the PCH may be cleared by a signal indicating the completion of communication on the PCH being received, for example.

### Apparatus Configuration

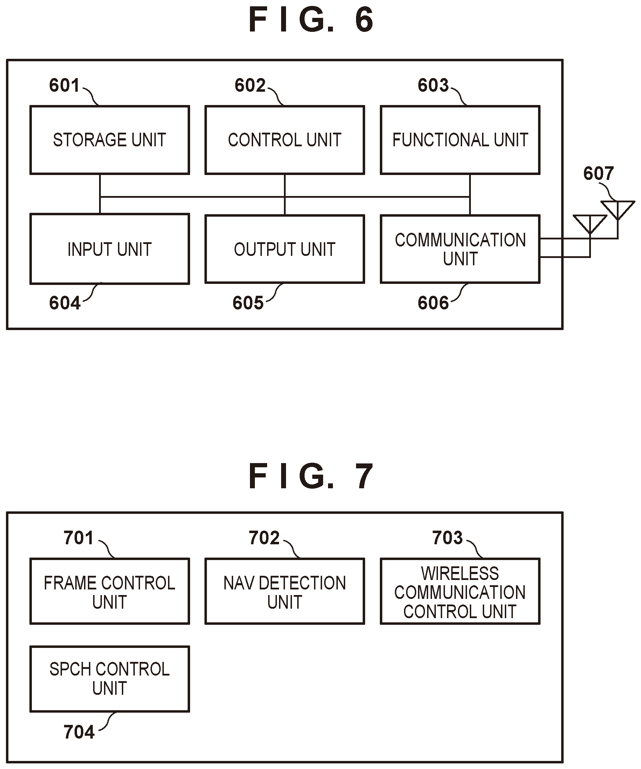

FIG. 6 illustrates a hardware configuration example of the communication apparatus 100. The communication apparatus 100, as an example of the hardware configuration, includes a storage unit 601, a control unit 602, a functional unit 603, an input unit 604, an output unit 605, a communication unit 606, and an antenna 607, for example. The communication apparatus 100 may include a plurality of antennas.

The storage unit 601 is constituted by one or more memories including a ROM, a RAM, or the like and may store various types of information including control programs for the functional units constituting the communication apparatus 100 to perform various types of operations, parameters for communication, and the like. ROM is an abbreviation for Read Only Memory, and RAM is an abbreviation for Random Access Memory. As the storage unit 601, a storage medium such as a flexible disk, a hard disk, an optical disk, a magneto-optical disk, a CD-ROM, a CD-R, magnetic tape, a non-volatile memory card, a DVD, and the like may be included in addition to the memory including the ROM, the RAM, and the like.

The control unit 602, for example, is constituted by one or more processors including a CPU, an MPU, or the like and controls the entire communication apparatus 100 by executing the control programs stored in the storage unit 601. Note that the control unit 602 may control the entire communication apparatus 100 via cooperation between the control programs stored on the storage unit 601 and an OS (Operating System). Note that CPU is an abbreviation for Central Processing Unit, and MPU is an abbreviation for Micro Processing Unit. In a case where the control unit 602 includes a plurality of processors that may be implemented by multiple cores or the like, the control unit 602 may be configured in a manner such that the entire communication apparatus 100 is controlled by the plurality of processors.

Also, the control unit 602 controls the functional unit 603 and executes predetermined processing such as communication, image capture, printing, projecting, and the like. The functional unit 603 is hardware for the communication apparatus 100 to execute the predetermined processing described above. For example, in a case where the apparatus is a camera, the functional unit 603 is an image capture unit that executes image capture processing. Also, for example, in a case where the apparatus is a printer, the functional unit 603 is a printing unit that executes printing processing. In a case where the apparatus is a projector, the functional unit 603 is a projecting unit and executes projecting processing.

The input unit 604 receives various types of operations from a user. The output unit 605 outputs various types of output to a user via a monitor screen or a speaker, for example. In this example, output via the output unit 605 may correspond to displaying on a monitor screen, outputting audio via a speaker, outputting vibrations, and the like. Note that the input unit 604 and the output unit 605 may be implemented together as one module such as in the case of a touch panel. Also, the input unit 604 and the output unit 605 may each be an apparatus integrally formed with the communication apparatus 100 or may each be separate apparatuses.

The communication unit 606 performs control of wireless communication compliant with the IEEE 802.11bn standard. Also, the communication unit 606 may perform control of wireless communication compliant with other legacy standards such as other IEEE 802.11 standard series in addition to the IEEE 802.11bn standard. The communication unit 606 controls the antenna 607 and transmits and receives signals for wireless communication generated by the control unit 602. The communication unit 606 is a so-called radio chip, and this may be provided with one or more processors and memories. Note that in a case where the communication apparatus 100 supports NFC standards, Bluetooth standards, and similar wireless communication standards and wired LAN and similar wired communication in addition to the IEEE 802.11bn standard, the communication unit 606 may perform control of communication compliant with these communication standards. Also, in a case where the communication apparatus 100 can execute wireless communication that complies with a plurality of communication standards, the communication apparatus 100 may have a configuration in which a communication unit that supports each of the communication standards and an antenna are provided separately. The communication apparatus 100 communicates data with the partner communication apparatus via the communication unit 606. Note that the antenna 607 may be separately formed from the communication unit 606 or may be formed as a single module together with the communication unit 606. The communication apparatus 100 may be provided with the communication unit 606 at a number required for setting a plurality of SPCHs.

The antenna 607, for example, is an antenna that can communicate at the 2.4 GHz band, the 5 GHz band, the 6 GHz band, millimeter waves, and the like. In FIG. 6, the illustrated configuration of the communication apparatus 100 includes the two antennas 607, but the communication apparatus 100 may include one or three or more antennas or may include one or more antennas for each frequency band usable by the apparatus. Also, in a case where the communication apparatus 100 includes a plurality of antennas, the communication apparatus 100 may include the communication unit 606 for each antenna.

### Functional Configuration

FIG. 7 illustrates an example of the functional configuration of the communication apparatus 100. The functional configuration according to the present embodiment, for example, is an example of a functional configuration implemented by the one or more processors executing programs stored in the one or more memories. The communication apparatus 100 includes a frame control unit 701, a NAV detection unit 702, a wireless communication control unit 703, and an SPCH control unit 704.

The frame control unit 701 executes generation and analysis of signals (frames) when communication is performed with the partner communication apparatus. The frame control unit 701, for example, generates a management frame for the communication apparatus 100 to execute the association procedure. The management frame includes a Beacon, Probe Request, Probe Response, Association Request, and Association Response. The management frame generated by the frame control unit 701 is not limited thereto and may include an authentication frame, an action frame, and the like, for example. Also, the frame control unit 701 may generate a control frame, a data frame, and the like. The frame control unit 701 may generate a UHR Capabilities element and a UHR Operation element (hereinafter referred to as a UHR Capabilities element and the like) specified by the IEEE 802.11 standard series. The UHR Capabilities element and the like may include capability information of whether or not the communication apparatus 100 has the capability to execute NPCH access. The capability to execute NPCH access refers to an operation for communicating using NPCH (second channel) being able to be performed without using the PCH (first channel), for example. Also, the capability to execute NPCH access may include either or both of the capability relating to transmission and the capability relating to reception. There may be one or more NPCH. The frame control unit 701 may generate the management frame described above including the UHR Capabilities element and the like. The UHR Capabilities element and the like may include the number of channels on which the communication apparatus 100 is capable of performing carrier sense in parallel. Also, the UHR Capabilities element and the like may include identification information for identifying the SPCH. The SPCH is included in the NPCH and may be referred to as a third channel in terms of being used for obtaining a transmission right in a case where the PCH cannot be used. The SPCH may be identified by the channel number specified by the standard or the like. Also, the SPCH may be identified by the relative position with respect to the PCH on the frequency axis. In a case where there are a plurality of SPCHs, the frame control unit 701 may include a priority order indicating which of the SPCHs to prioritize when performing carrier sense in the UHR Capabilities element and the like. The frame control unit 701 may generate a frame including the UHR Capabilities element and the like based on a request from the partner communication apparatus. Also, the frame control unit 701 may obtain the UHR Capabilities element and the like by analyzing the frame received from the partner communication apparatus. The frame control unit 701, by analyzing the received frame, may obtain the Duration value and notify the NAV detection unit 702 of the value.

The NAV detection unit 702 sets the NAV of each channel based on the Duration value extracted by the frame control unit 701. The wireless communication control unit 703 executes transmission processing of each frame generated by the frame control unit 701. Also, the wireless communication control unit 703 notifies the frame control unit 701 of the frame received via the antenna 607. For example, the wireless communication control unit 703 may execute transmission or reception of a data frame (data) using one or more channels including at least one of the PCH and the NPCH. For example, the wireless communication control unit 703 executes carrier sense of the PCH when transmitting a data frame. In a case where a signal is detected on the PCH or the NAV is set for the PCH in the NAV detection unit 702, the wireless communication control unit 703 executes carrier sense of the SPCH in order to execute NPCH access. In a case where a signal has not been detected on the SPCH and the NAV is not set for the SPCH by the NAV detection unit 702, for example, the wireless communication control unit 703 transmits a data frame using one or more NPCHs including the SPCH. The SPCH control unit 704 executes setting and control for performing NPCH access. The SPCH control unit 704 determines the SPCH from among the plurality of NPCHs included in the link. The SPCH may be determined based on the UHR Capabilities element included in the Beacon notified by the AP 101. Also, the SPCH may be determined based on the exchange of capability information between the apparatuses in the association procedure between the AP 101 and the STA 102. The SPCH control unit 704 may control the wireless communication control unit 703 to complete the NPCH access before the NAV time period set by the NAV detection unit 702 expires.

### Processing Flow

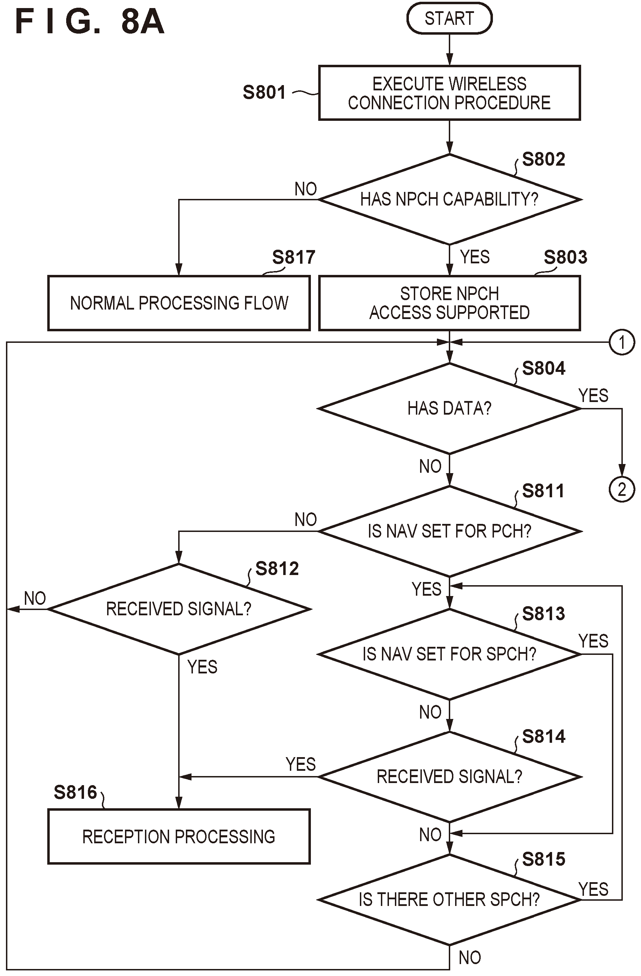

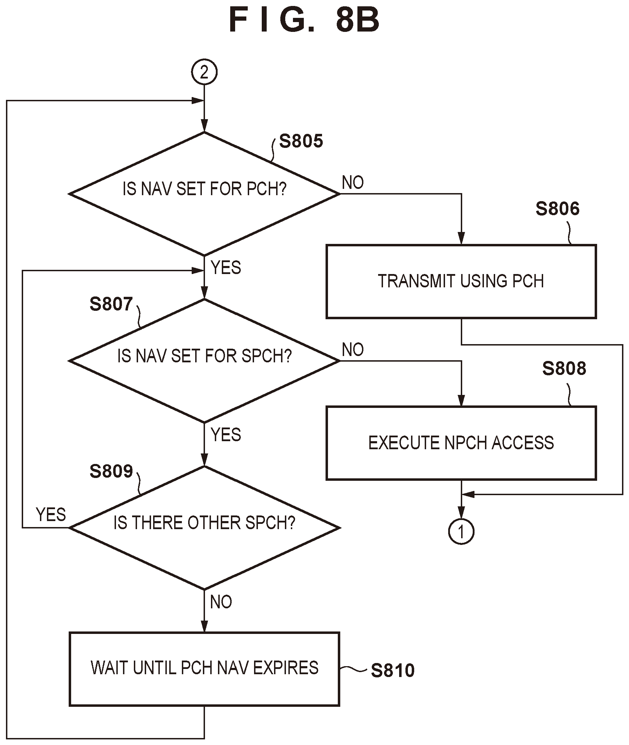

In the present embodiment, the flow of the processing executed by the AP 101 and the STA 102 configured as described above will now be described. FIGS. 8A and 8B are flowcharts illustrating the operations of the communication apparatus 100 (the AP 101 or the STA 102). Note that the operation flow may be processed by the control unit 602 reading out and executing a computer program stored in the storage unit 601 via the association procedure between the AP 101/STA 102 and the partner communication apparatus. Hereinafter, the operations of the AP 101 will be described, but the STA 102 operates in a similar manner.

The AP 101 executes the wireless connection procedure with the STA 102 (S801). In a case where the Association Request or the like received from the STA 102 does not include a UHR Capabilities element, the AP 101 determines that the STA 102 does not support NPCH access (NO in S802). Also, in a case where the UHR Capabilities element includes capability information indicating that NPCH access is not supported, the AP 101 may determine that the STA 102 does not support NPCH access. In such cases, the AP 101 executes the normal processing flow (S817). The normal processing flow is, for example, a processing flow in which, in a case where the PCH is in the busy state, without performing NPCH access, transmission is put on standby until the PCH is in the idle state or a power save operation is executed in which power is not supplied to the antenna during this time period. In a case where the AP 101 determines that the STA 102 supports NPCH access based on the UHR Capabilities element (YES in S802), that NPCH access is supported is stored as an attribute of the STA 102 (S803). Also, in the association procedure with the STA 102, the AP 101 may share the number of channels performing carrier sense simultaneously in NPCH access (number of channels performing carrier sense), the SPCHs and the priority order assigned to each SPCH, and the like. When the AP 101 detects the accumulation of data in the transmission queue (YES in S804), the AP 101 executes carrier sense on the PCH. In a case where the PCH is determined to be in the idle state due to the PCH not being set with a NAV or the like (NO in S805), the AP 101 transmits data using the PCH (S806). The AP 101 may transmit data using the PCH and the SCH in the idle state. In a case where the PCH is set with a NAV by a signal received from an OBSS (YES in S805), the AP 101 executes carrier sense on the SPCH. In a case where a plurality of SPCHs are set, carrier sense may be performed in parallel for the same number of SPCHs as the number of channels performing carrier sense in order from the SPCH with the highest priority order. In a case where the AP 101 determines that the SPCH is in the idle state due to the SPCH not being set with a NAV (NO in S807), the AP 101 transmits data via NPCH access including the SPCH (S808). On the other hand, in a case where the SPCH is set with a NAV by a signal received from an OBSS (YES in S807), the AP 101 checks whether or not there is an SPCH with the next highest priority order. In a case where there is a SPCH with the next highest priority order (YES in S809), the AP 101 returns to S807 and executes carrier sense on that SPCH. In a case where there are no other set SPCHs, the AP 101 waits until the NAV of the PCH ends (S810). When the NAV of the PCH ends, the AP 101 returns to S805 and continues the processing.

In a case where data has not accumulated in the transmission queue (NO in S804), the AP 101 monitors the presence of a signal on the PCH. In a case where the NAV has been set by a signal from an OBSS detected on the PCH (YES in S811), the AP 101 monitors the presence of a signal on the SPCH. In a case where a plurality of SPCHs are set, the AP 101 monitors the presence of a signal on the same number of SPCHs as the number of channels performing carrier sense in order from the SPCH with the highest priority order. In a case where a signal has not been received on the PCH (NO in S811 and NO in S812), the AP 101 returns to S804 and continues the processing. Also, in a case where the AP 101 has received a signal on the PCH with itself as the destination before the NAV is set (NO in S811 and YES in S812), the AP 101 executes reception processing of that signal (S816). In a case where the NAV has been set via a signal detected on the SPCH (YES in S813), the AP 101 checks whether or not there is an SPCH with the next highest priority order. In a case where there is a SPCH with the next highest priority order (YES in S815), the AP 101 returns to S813 and monitors the presence of a signal on the SPCH. In a case where the AP 101 has received a signal on the SPCH with itself as the destination before the NAV is set (NO in S813 and YES in S814), the AP 101 executes reception processing of that signal (S816). Also, in a case where a predetermined time period elapses without a signal being detected on the SPCH, the AP 101 checks whether or not there is an SPCH with the next highest priority order. In a case where there is a SPCH with the next highest priority order (YES in S815), the AP 101 returns to S813 and monitors the presence of a signal on the SPCH. In a case where there is no other set SPCH (NO in S815), the AP 101 returns to S804. Note that in a case where a NAV is not set for the SPCH with the highest priority order, the AP 101 may monitor the presence of a signal on the SPCH until the NAV set for the PCH expires. During the time period of the NAV set for the PCH, even if data is generated in the STA 102 and the STA 102 starts NPCH access, the AP 101 can appropriately receive a signal.

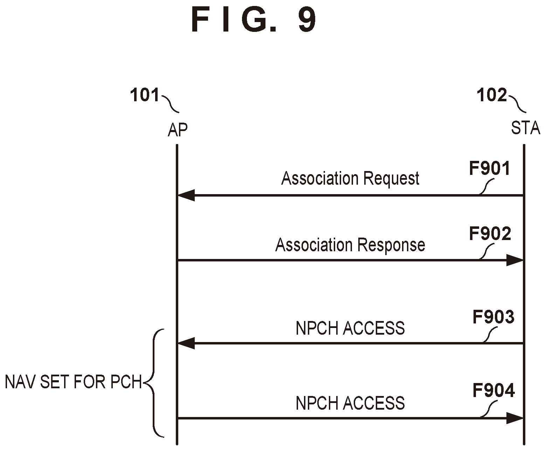

FIG. 9 illustrates an example of a sequence between the AP 101 and the STA 102 according to the present embodiment. First, the AP 101 and the STA 102 execute the association procedure (F901, F902). For example, between the apparatuses, an Association Request and an Association Response are exchanged. Capability information relating to NPCH access may be shared via a UHR Capabilities element and a UHR Operation element included in the Association Request and the Association Response. The AP 101 and the STA 102 transmit and receive data based on the NPCH access capability information notified or obtained from one another (F903, F904). For example, in a case where a NAV has been set for the PCH, carrier sense is performed in order from the SPCH assigned with the highest priority order, and NPCH access is performed.

As described above, according to the present embodiment, between communication apparatuses, capability information relating to NPCH access and SPCHs to execute carrier sense in the NPCH access may be shared. Also, in a wireless communication system in which communication is performed using a link formed of a PCH and one or more SCHs, even in a case where the PCH is set with a NAV, data can be transmitted and received using an NPCH. Accordingly, the frequency use efficiency for the link used in communication between these communication apparatuses can be increased. Note that in the present embodiment described above, communication uses NPCH access between the AP 101 and the STA 102. However, the present technology is applicable to communication between a plurality of STAs. Also, in the present embodiment described above, communication uses a link with a bandwidth of 160 MHz. However, the present technology is applicable to any communication that uses two or more channels. In the present embodiment described above, a CH for determining whether transmission can be performed using the SCH (or NPCH) is referred to as SPCH for the sake of convenience. However, no such limitation is intended. It may be referred to as PSCH (Primary Secondary Channel) with the meaning of a CH with a high priority for determining whether transmission can be performed from among the plurality of secondary channels. Whichever term is used, the meaning is a channel to be used for determining whether transmission can be performed using the SCH (or NPCH).

The present invention may be implemented by providing a program that implements one or more of the functions of the embodiment described above to a system or a device via a network or a storage medium and the program being read out and executed by one or more processors in a computer of the system or device. Also, the present invention may be implemented by a circuit (for example, ASIC) that implements one or more of the functions.

The present invention is not limited to the above embodiments and various changes and modifications can be made within the spirit and scope of the present invention. Therefore, to apprise the public of the scope of the present invention, the following claims are made.

According to the embodiment described above, the use efficiency of a channel in a communication system that uses a communication link constituted by a plurality of channels can be enhanced.

The present application claims priority from Japanese Patent Application No. 2023-166224 filed on September 27, 2023, which is hereby incorporated by reference herein.

## Claims

1. A communication apparatus capable of performing communication with another communication apparatus using one communication link constituted by a first channel used for obtaining a transmission right and one or more second channels different from the first channel, comprising:
notifying means for notifying, using at least one of a UHR (Ultra High Reliability) Capabilities element and a UHR Operation element specified by IEEE 802.11 standard series, another communication apparatus of capability information indicating that an operation for performing communication using the one or more second channels and not using the first channel can be performed; and
communicating means for communicating data with said another communication apparatus using one or more channels including any of the first channel and the second channels based on the capability information.

2. The communication apparatus according to claim 1, wherein
the notifying means notifies, as the capability information, that at least one of transmission and reception of data can be performed on the one or more second channels without using the first channel.

3. The communication apparatus according to claim 1 or 2, wherein
the notifying means notifies said another communication apparatus of the capability information based on a request from said another communication apparatus.

4. The communication apparatus according to claim 3, wherein
the notifying means notifies, as the capability information, a total number of channels capable of performing carrier sense in parallel.

5. The communication apparatus according to any one of claims 1 to 4, wherein
the notifying means notifies the capability information including identification information for identifying a third channel which is a channel included in the one or more second channels and is used for obtaining a transmission right in a case where the first channel cannot be used.

6. The communication apparatus according to claim 5, wherein
the notifying means notifies, as the identification information, information that can identify a channel number of the third channel.

7. The communication apparatus according to claim 5, wherein
the notifying means notifies, as the identification information, information that can identify a relative position of the third channel with respect to the first channel on a frequency axis.

8. The communication apparatus according to any one of claims 5 to 7, wherein
in a case where there are a plurality of the third channel, the notifying means notifies said another communication apparatus of the capability information including a priority order indicating which of the third channels to prioritize when performing carrier sense.

9. A communication apparatus capable of performing communication with another communication apparatus using one communication link constituted by a first channel used for obtaining a transmission right and one or more second channels different from the first channel, comprising:
obtaining means for obtaining, from another communication apparatus, capability information indicating that an operation for performing communication using the one or more second channels and not using the first channel can be performed, the capability information being included in at least one of a UHR (Ultra High Reliability) Capabilities element and a UHR Operation element specified by IEEE 802.11 standard series; and
communicating means for communicating data with said another communication apparatus using one or more channels including any of the first channel and the second channels based on the capability information.

10. The communication apparatus according to claim 9, wherein
the obtaining means obtains, as the capability information, a capability of said another communication apparatus to perform at least one of transmission and reception of data on the one or more second channels without using the first channel.

11. The communication apparatus according to claim 9 or 10, wherein
the obtaining means requests said another communication apparatus for notification of the capability information.

12. The communication apparatus according to any one of claims 9 to 11, wherein
the obtaining means obtains, as the capability information, a total number of channels for which said another communication apparatus is capable of performing carrier sense in parallel.

13. The communication apparatus according to any one of claims 9 to 12, wherein
the obtaining means obtains the capability information including identification information for identifying a third channel which is a channel included in the one or more second channels and is used for obtaining a transmission right in a case where the first channel cannot be used.

14. The communication apparatus according to claim 13, wherein
the obtaining means obtains, as the identification information, information that can identify a channel number of the third channel.

15. The communication apparatus according to claim 13, wherein
the obtaining means notifies, as the identification information, information that can identify a relative position of the third channel with respect to the first channel on a frequency axis.

16. The communication apparatus according to any one of claims 13 to 15, wherein
in a case where there are a plurality of the third channel, the obtaining means obtains the capability information including a priority order indicating which of the third channels to prioritize when said another communication apparatus performs carrier sense.

17. The communication apparatus according to claim 1 or 16, wherein
the UHR (Ultra High Reliability) Capabilities element or the UHR Operation element is included in a Beacon frame, a Probe Request frame, a Probe Response frame, an Association Request frame, an Association Response frame, or an Action frame specified by IEEE 802.11 standard series.

18. A communication method executed by a communication apparatus capable of performing communication with another communication apparatus using one communication link constituted by a first channel used for obtaining a transmission right and one or more second channels different from the first channel, comprising:
notifying, using at least one of a UHR (Ultra High Reliability) Capabilities element and a UHR Operation element specified by IEEE 802.11 standard series, another communication apparatus of capability information indicating that an operation for performing communication using the one or more second channels and not using the first channel can be performed; and
communicating data with said another communication apparatus using one or more channels including any of the first channel and the second channels based on the capability information.

19. A communication method executed by a communication apparatus capable of performing communication with another communication apparatus using one communication link constituted by a first channel used for obtaining a transmission right and one or more second channels different from the first channel, comprising:
obtaining, from another communication apparatus, capability information indicating that an operation for performing communication using the one or more second channels and not using the first channel can be performed, the capability information being included in at least one of a UHR (Ultra High Reliability) Capabilities element and a UHR Operation element specified by IEEE 802.11 standard series; and
communicating data with said another communication apparatus using one or more channels including any of the first channel and the second channels based on the capability information.

20. A program for causing a computer provided in a communication apparatus to execute the communication method according to claim 18 or 19.
